# EUROPEAN PATENT SPECIFICATION

(11) **EP 2 876 735 B1**
(45) Date of publication and mention of the grant of the patent: **07.08.2019**
(21) Application number: 13193871.4
(22) Date of filing: 21.11.2013
(51) Int. Cl.: H01R 9/20, H01R 13/53, H01R 25/16, H02G 15/08

(54) **Connector for medium and low voltage application**
Steckverbinder für Mittel- und Niederspannungsanwendung
Connecteur pour application de moyenne et basse tension

(43) Date of publication of application: 27.05.2015
(73) Proprietor: Tyco Electronics Raychem GmbH, 85521 Ottobrunn (DE)
(72) Inventor: Heindl, Christian, 80807 München (DE); Simonsohn, Thilo, 81735 München (DE)
(74) Representative: Patentanwaltskanzlei WILHELM & BECK

(56) References cited:
- EP-A2- 1 286 375
- EP-B1- 0 147 979
- WO-A1-91/11040
- WO-A1-2011/061074
- DE-A1- 19 845 776
- US-A- 4 799 895

## Description

The present invention relates to a connector for medium and low voltage application according to claim 1.

EP 0 147 979 B1 describes a connector for medium and low voltage application with a housing made of an electrically insulating material. The housing may become inappropriately soft when the plugs are taken off during an exchange procedure. Also, when plugs are positioned in the housing, the plugs might be exposed to high mechanical loads which can lead to failure of the plugs or inappropriate deformation of the housing and failure of the electrical interfaces.

WO 91/11040 discloses a connector with a housing with a first chamber for receiving a first terminal and at least a part of a second terminal and a second terminal, wherein the first chamber is embodied to receive an inner plug, wherein the inner plug is provided for electrically connecting the first terminal with the second terminal, wherein the housing comprises a connecting means that is fixed with the housing, wherein the connecting means is arranged in the first chamber, wherein the connecting means is provided for a connection with the first terminal.

The object of the invention is to provide a connector for medium and low voltage application with an improved mechanical stability.

The object of the invention is attained by the connector according to claim 1.

Further embodiments are described in the dependent claims.

In accordance with one aspect of the present invention, a connector for medium and low voltage application with a housing is provided, wherein the housing comprises connecting means. The connecting means ensures that the connector can be strongly fixed with a first terminal and that the connector cannot be easily removed from the first terminal. Furthermore, the position of the housing relative to the first terminal is determined more precisely.

The connecting means sustains a stable position of the connector housing referring to the first terminal. This is for example of advantage for an elbow housing for an elbow connector. The connecting means holds the housing and especially the chambers for the plugs in a predefined position and/or shape. Therefore, less mechanical stress may be induced in the housing and in the plugs. Furthermore, the plugs can be taken off the connector and the housing of the connector is strongly fixed to the first terminal and stays in the predetermined position. As a result, less stress is induced in the housing when the plugs are removed. Additionally, the plugs can be mounted to the housing more easily since the housing and the chambers for the plugs stay in the predetermined position and/or shape. External elements such as fixing means of a housing or a wall of an electrical equipment are not necessary to fix the connector at the electrical equipment.

Further connecting means is arranged at an outer face of the housing and the housing. The further connecting means has the shape of a shell that covers at least a part of the face of the housing. This embodiment provides a simple and stable further connecting means. The shell may be made of one or more than one part that encompasses the housing at least partially and keeps the housing in a predetermined shape. The shell may also be embodied in order to clamp the first and the second part of the housing and to hold the first and the second part in a predetermined position.

The first chamber of the housing comprises an inner rim that is assigned to the first connecting means, wherein the inner rim abuts on a face of the first connecting means that is assigned to the first chamber, wherein the inner rim defines a diameter of the first chamber that is smaller than the cross section of the first connecting means perpendicular to the first axis. Therefore, it is necessary to expand the inner rim over an outer face of the first connecting means to remove the housing from the first terminal. Higher force is necessary to pull the housing from the first terminal. The further connecting means comprise fixing means for fixing the shell to the housing, wherein the fixing means is for example form fit means.

In a further embodiment, the connecting means is arranged in the housing and protrudes at least partly from a first chamber of the housing. The first chamber of the housing is provided for receiving a first terminal, for example a bushing of an electrical equipment. The connecting means is additionally used as an electrical connecting member between the bushing and an inner plug that connects the bushing with a second electrical terminal. Depending on the used embodiment, the connecting means comprises contact sections for connecting the connecting means with the first terminal and with an inner plug.

In a further embodiment, the connecting means has the shape of a plate for example with a hole, wherein the hole is arranged in the first chamber and the plate is fixed to the housing. The hole is used as a connection section between the first terminal and the plate and between the inner plug and the plate. The plate may be form-fit fixed to the housing. For example the plate is partly arranged in a recess of the housing.

In an example not forming part of the invention, the connecting means may have the shape of a plate and a pin that is connected with the plate. The pin comprises at a free end a contact section for electrically and mechanically connecting the first terminal that may be embodied as a bushing of an electrical equipment.

In a further embodiment, the shell may comprise a fixing means for fixing the shell to a wall or a housing of an electrical equipment. Thus, it is possible to fix the shell and therefore to fix the connector to the wall or to the electrical equipment.

The connector may be an elbow connector with an angle between 10° and 170°, preferably with an angle of 90°. Especially, for elbow connectors, a stable shape is necessary.

In a further embodiment the further connecting means and/or the fixing means is arranged in an area of the inner rim. The connecting means and/or the fixing means clamps the housing to the first connecting means and hampers the expanding of the inner rim. Therefore, higher forces are necessary to pull the housing off the first terminal.

In a further embodiment an outer plug is provided in the first chamber adjacent to the inner plug. The outer plug is used as a closure element. Depending on the used embodiment, the outer plug is made of electrically insulating material.

In a further embodiment, the outer plug is at least partially made of electrically conducting material and is used for electrically connecting the inner plug with a further electrical conductor. The further conductor may be a cable that is connected to the connector, i.e. with the inner plug and/or the second terminal.

Embodiments of the connector will now be described, by way of example, with reference to the accompanying drawings in which:
- Figure 1: shows a first embodiment of a connector,
- Figure 2: shows a second embodiment of a connector,
- Figure 3: shows a third embodiment of a connector,
- Figure 4: shows a fourth embodiment of a connector,
- Figures 5 to 9: show different embodiments of first connecting means,
- Figures 10 to 12: show further embodiments of the first plate,
- Figure 13: shows a fifth embodiment of a connector, and
- Figure 14: shows a sixth embodiment of a connector.

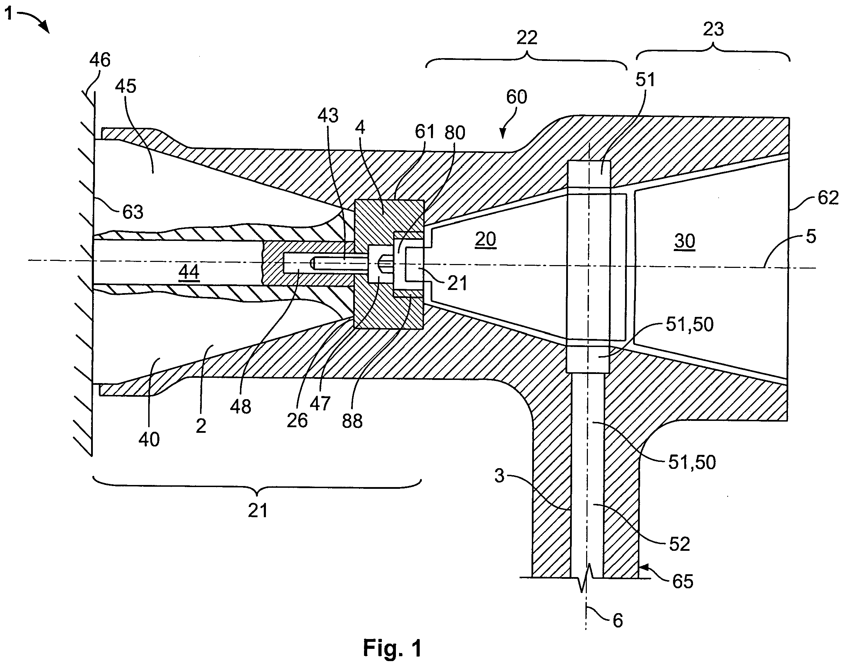

Figure 1 shows a cross sectional view of a first embodiment of the connector 25. The connector 25 comprises a housing 1. The housing 1 comprises a first chamber 2 and a second chamber 3. The first chamber 2 is arranged along a first axis 5. The second chamber 3 is arranged along a second axis 6 with a predetermined angle to the first axis 5. The predetermined angle may vary between 10° and 170°. Preferably, the second axis 6 is arranged in a 90°-angle referring to the first axis 5. The first chamber 2 is provided for receiving a first terminal 40 that may be embodied as a bushing of an electrical equipment 46. The bushing 40 may comprise a first conductor 44 that is covered by an insulator 45. The second chamber 3 is embodied for receiving a second terminal 50; the second terminal 50 is for example embodied as a conductor 52 being surrounded by an insulating material.

In the shown embodiment, the first chamber 2 is arranged along the first axis 5 and open at two opposite ends of a base part 60 of the housing 1. The base part 60 has a longitudinal shape along the first axis 5. A dome 65 protrudes laterally from the base part 60. The dome 65 is arranged along the second axis 6, has the shape of a sleeve and comprises the second chamber 3. In the shown embodiment, the base part 60 and the dome 65 are arranged in one piece. Depending on the used embodiment, the base part 60 and the dome 65 may be separate pieces. In other embodiments there may be more than one dome arranged in one or more pieces.

A first section 21 of the first chamber 2 is provided for receiving the first terminal 40. The first section 21 ends at a first connecting means 4. In the shown embodiment, the first connecting means 4 is constructed as a plate that is fixed with the housing 1 and that is partly arranged in a recess 61 of the housing 1 and in the first chamber 2. The first chamber 2 comprises an inner rim 26 that is assigned to the first connecting means 4. The inner rim 26 defines a cross section of the first chamber 2 adjacent to the first supporting means 4. The first supporting means 4 has a larger cross section than the diameter of the inner rim 26. The inner rim 26 abuts on a face of the first supporting means 4 and defines an overlap that is assigned to the first chamber 2. If the housing 1 is to be removed from the first terminal 40, then the inner rim 26 has to be expanded over the broader outer face 29 of the first supporting means 4. The inner rim 26 prevents an easy removing of the housing from the first terminal 40. The inner rim 26 may have the shape of a circular overlap.

The first connecting means 4 separates the first section 21 of the first chamber 2 from a second section 22 of the first chamber 2. The second section 22 extends from the first connecting means 4 in the direction of the second axis 6 to a predetermined distance beyond the second axis 6. The second section 22 is provided for receiving an inner plug 20. The inner plug 20 may be made of an electrically conducting material. The inner plug 20 is used for electrically connecting the first terminal 40 with the second terminal 50. In the shown embodiment, the second terminal 50 comprises a contact ring 51 that encircles the first chamber 2 in a plane of the second axis 6. The contact ring 51 is electrically connected to a conductor 52. The conductor 52 may be a conductor of a cable. Different shapes of the contact ring 51 are possible. The shape of the contact ring 51 may relate e.g. to the design of the electrical contact to the inner plug 20.

A third section 23 follows the second section 22. The third section 23 extends to a first end face 62 of the base part 60 of the housing 1. The third section 23 is provided for receiving an outer plug 30 that may be made of an electrically insulating material. The outer plug 30 is fixed to the base part 60 of the housing 1 and holds the inner plug 20 in the predetermined position. In a mounted position, the inner plug 20 may extend through the contact ring 51 of the second terminal 50.

The first connecting means 4 comprises contact sections 42, 43 for electrically and mechanically connecting the first terminal 40 to the first connecting means 4 and the inner plug 20 to the first connecting means 4. In the shown embodiment, the first connecting means 4 is screwed into e.g. the first conductor 44 with at least one screw 47. The screw 47 is bolted to a thread 48 of the first conductor 44. The inner plug 20 comprises a threaded section 21 that is screwed to a thread of the hole 80 of the plate 4.

The housing 1 may be made of an elastomeric material, for example silicone, TPE or EPDM. The first connecting means 4 may be made of metal or another electrically conducting material that comprises a higher shore hardness than the material of the housing 1. Since the first connecting means 4 is connected to the first terminal 40 and fixed in the housing 1, a stable position of the housing 1 is attained also in the case that the inner plug 20 and the outer plug 30 are taken off for example during an exchange procedure of the second terminal 50. Additionally, the shape of the housing 1 is supported by the first connecting means 4 when the inner plug 20 and the outer plug 30 are in the mounted position. Therefore, less stress is induced in the inner plug 20 and the connection between the inner plug 20 and the second terminal 50.

Due to the first connecting means 4, the housing 1 with a bending and the shape of an elbow is retained on the first terminal 40 that may be embodied as a bushing. Due to the first connecting means 4, pull-off forces that are sufficient to pull off the housing 1 from the first terminal 40 are increased remarkably. Depending on the used design of the first connecting means 4, the housing 1 may be prevented from any pull-off without material destruction of the housing 1.

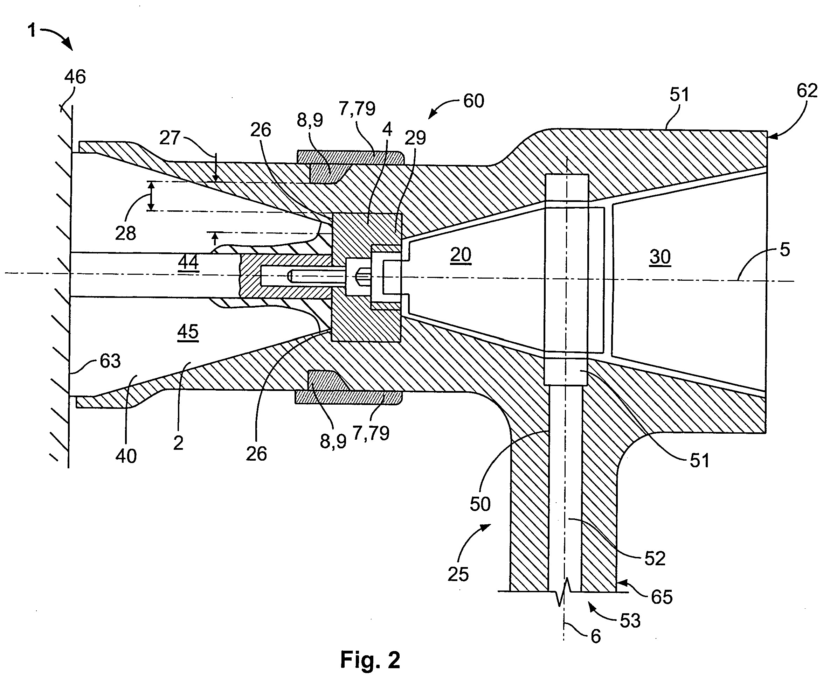

Figure 2 shows a further embodiment of a connector 25 that comprises the features of the housing 1 of Figure 1 and additionally a second connecting means 7. The second connecting means 7 is made of a shell that covers at least a part of the outer face of the housing 1. The second connecting means 7 may be embodied in one part or in several parts that are connected to each other or fixed to the housing for example by mechanical means such as form fit and/or force fit and/or face fit or gluing. The second connecting means 7 may be made of metal, duroplastic plastics, thermoplastic or elastomeric material with a higher shore hardness, for example higher than A50 with or without reinforcement structure. The second connecting means 7 may have a higher hardness than the material of the housing 1. In the shown embodiment, the second connecting means 7 is constructed as a ring shell 79 that is arranged in the region of the first connecting means 4. The ring shell 79 encompasses the base part 60 of the housing 1. Depending on the used embodiment, there may be first and second fixing means 8, 9 that are used for fixing the second connecting means 7 to the housing 1. In the shown embodiment, the first and second fixing means 8, 9 are form-fit shapes of the ring shell 79 and the housing 1. For example the housing 1 comprises as second fixing means undercuts 9, in which noses 8 of the ring shell 79 are arranged as first fixing means. Depending on the used embodiments, the ring shell 79 may comprise openings in which noses of the housing 1 project. The first and second fixing means 8, 9 fix the second connecting means 7 to the housing 1. The first fixing means 8 can also be designed as a ring that is arranged in a plane perpendicular to the first axis 5. In this embodiment, the second fixing means 9 is embodied as a circular undercut that surrounds the base part 60 in a plane that is arranged perpendicular to the first axis 5. The first fixing means 8 retains the housing 1 that may be made of a soft material in a circular shape. The first fixing means 8 and the ring shell 79 may be embodied in one piece or as separate pieces.

The first fixing means 8 is arranged at a first radial distance 28 to an outer face 29 of the first supporting means 4. The first fixing means 8 is arranged at a second radial distance 27 to an inner rim 26 of the base part 60. The inner rim 26 defines the cross section of the first chamber 2 adjacent to the first supporting means 4. The inner rim 26 abuts on the first supporting means 4. If the housing 1 is to be removed from the first terminal 40 then the inner rim 26 has to be pulled over the broader outer face 29 of the first supporting means 4. Due to the first fixing means 8 a higher force is necessary to expand the inner rim 26 over the first supporting means 4.

The ring shell 79 may be constructed as one piece or in two pieces in a half-shell design or may comprise more than two pieces. The ring shell 79 may be made of continuous blanks or may have a number of openings when being formed of whole blanks or the like.

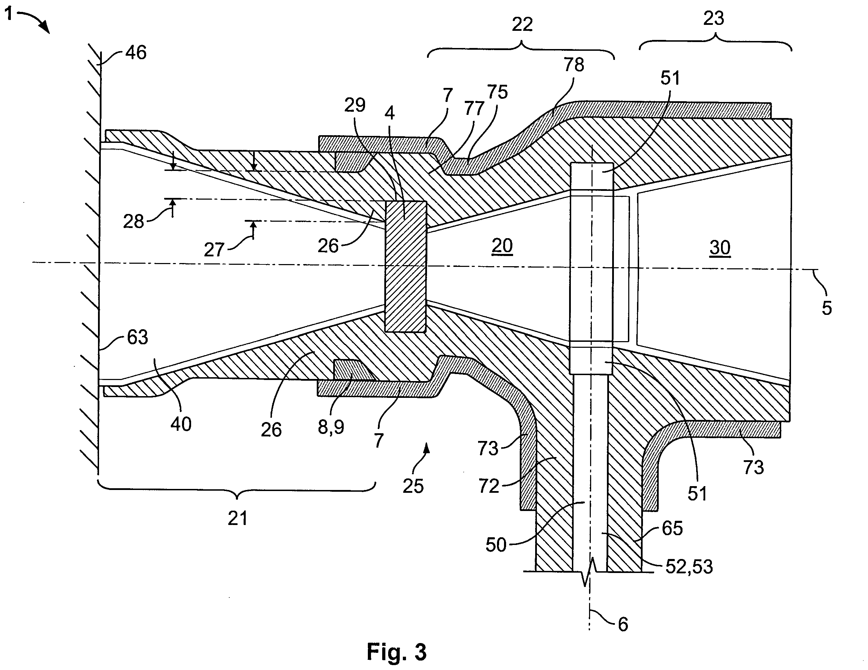

Figure 3 shows a further embodiment of the connector 25 with a housing 1 that comprises the features of the embodiment of figure 2, wherein the second connecting means 7 is constructed as a longitudinal sleeve 78 that compared to the embodiment of figure 2 covers a longer section of the base housing 60 including the section at which the dome 65 protrudes from the base housing 60. Therefore, it is possible to support the predetermined shape of the housing 1 along the first axis 5 and along the second axis 6 for a larger length than the design shown in figure 2. Therefore, the predetermined angle of the bending of the housing and the angle between the first and the second axis 5, 6 is supported by the second connecting means 7. The sleeve 78 comprises an opening 72 through which the dome 64 of the housing 1 is guided. The sleeve 78 comprises a circular wall section 73 that surrounds at least a section of the dome 65 adjacent to the base housing 60. Therefore the dome 65 is held in the predetermined position i.e. an angle referring to the longitudinal axis 5 of the base housing 60. The longer the wall section 73 is the stronger is the fixing of the dome 65 in the predetermined position. Depending on the used embodiment, the wall section 73 may be omitted and there may be only an opening 72 for the dome 65. The sleeve 78 covers at least a part of the first section 21 and a part of the second section 22. Furthermore, as shown in figure 3, the sleeve 78 may cover a part of the first section 21 and the second section 22 and at least a part of the third section 23. The longer the sleeve 78 is the stronger is the supporting of the shape of the housing 1. Depending on the used embodiment the first connecting means may be omitted and only the second connecting means 7, 79 may be provided.

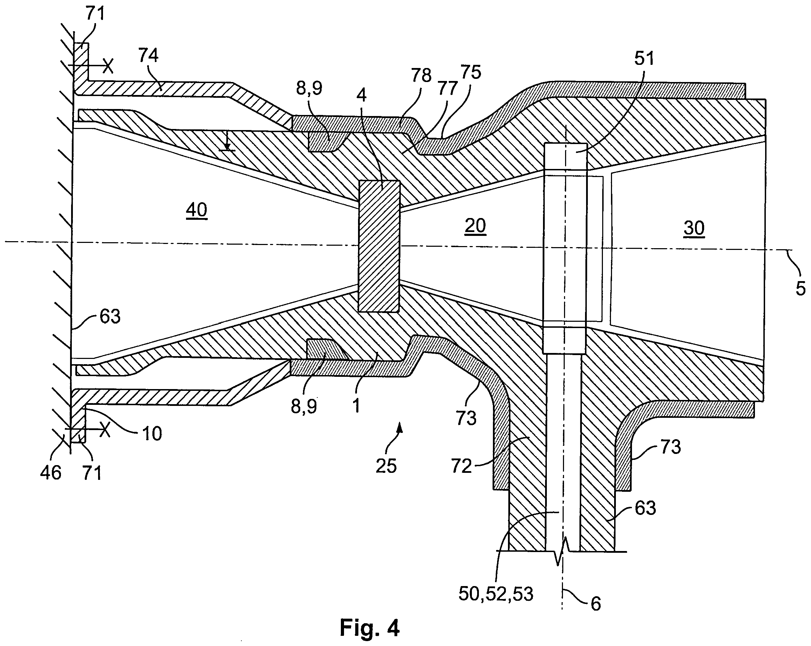

Figure 4 shows a further embodiment of a connector 25 with a housing 1 that is embodied as shown in figure 3 and with a second connecting means 7 in the shape of a sleeve 78, whereby the sleeve 78 is guided with an end section 74 to a first end face 62 of the base part 60 of the housing 1. At the first end face 62 of the base part 60, the sleeve 78 comprises circular abut faces 71 that comprise a further fixing means 10. The abut faces 71 are provided for abutting against a further housing, for example a housing of an electrical equipment 46 that comprises the bushing 40. The further fixing means 10 is provided for fixing the sleeve 78 to a housing of an electrical equipment 46 or a wall. The further fixing means 10 may be configured as holes for receiving screws to bolt the sleeve 78 to the housing of an electrical equipment 46. The base part 60 comprises a further recess 77 at the first part of the second section 22. The first recess 77 circumvents the base part 60 in a plane perpendicular to the first axis 5. The sleeve 78 has at least one nose or a lateral contraction 75 that is arranged at the further recess 77. The contraction 75 fixes the housing to the second connecting means 7. As a result, the housing 1 can be strongly fixed to the electrical equipment 46.

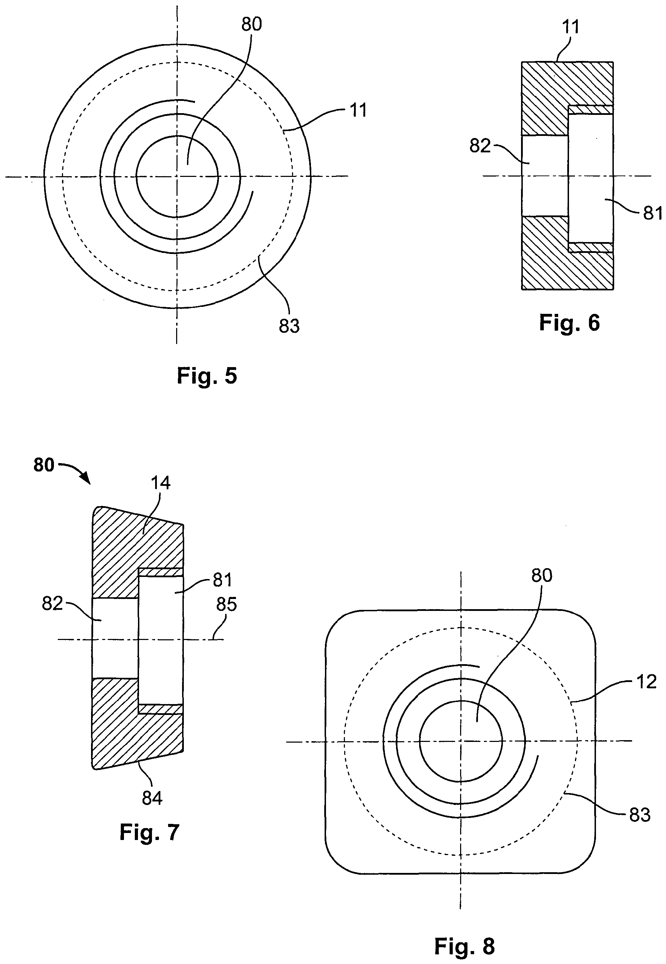

Figure 5 shows a top view on a first embodiment of a first connecting means 4 that is constructed as a circular first plate 11. A dashed line 83 is shown on the first plate 11 that defines an outer rim that is arranged in a recess of the housing 1 in the mounted position. The first plate 11 comprises a circular hole 80. The first plate 11 is embodied as a circular ring plate with a central hole 80. The hole 80 has two sections 81, 82 as shown in Figure 6. A first section 81 has a larger diameter than a second section 82. The hole 80 has a circular shape with different diameters in the different sections 81, 82. The first section may comprise a thread for receiving a thread bolt of the inner plug 20. The second section 82 may also comprise a thread for receiving a thread bolt of the first terminal 40. The second section may also be embodied as a hole to receive a bolt that is screwed in a thread of the first terminal 40.

Figure 7 shows an embodiment of the first connecting means that is constructed as a further plate 14, wherein a circular side face 84 of the further plate 14 is arranged inclined with an angle to a symmetry axis 85. This reduces the amount of material and/or allows for a slim design of the housing 1 in this area.

Figure 8 shows a further embodiment of the first connecting means that is embodied as a second plate 12. The second plate 12 has the basic shape of a rectangular plate with rounded edges. The hole 80 is embodied as shown in Figure 6. The dashed line 83 defines a circle and determines an outer rim that is arranged in a recess of the housing 1.

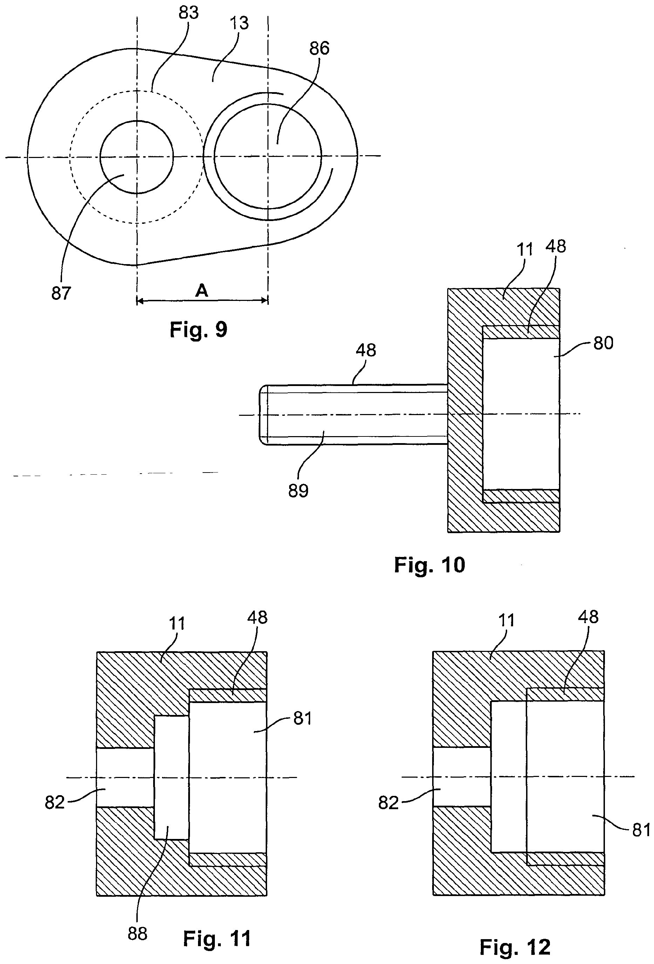

Figure 9 shows a further embodiment of the first connecting means embodied as a third plate 13. The third plate 13 has a polygon shape with rounded edges. The third plate 13 comprises two holes 86, 87, whereby the two holes may comprise threads that are used for mechanically and electrically connecting threaded pins of the inner plug 20 and the first terminal 40. In the shown embodiment, the second hole 87 may be used for connecting and fixing the first terminal 40. The first hole 86 may be used for connecting the inner plug 20. The two holes 86, 87 have a predetermined distance A. Depending on the used embodiment, an outer rim of the third plate 13 is covered by the housing 1. The dashed line 83 defines a circle around the second hole 87 and determines an outer rim that is arranged in a recess of the housing 1. Further embodiments are possible which have more than one hole 86 to allow to have housings 1 with more than one plug 20.

Figure 10 shows a further embodiment of the first plate 11 that comprises a further pin 89 with a thread 48. The pin 89 and the plate 11 are made in one piece and made of electrically conducting material. Figure 11 shows another embodiment of the first plate 11, wherein between the first and third section 81, 82 a third section 88 is arranged. The third section 88 is provided for receiving a head of a screw. The screw is used for mechanically and electrically connecting the first plate 11 with the first terminal 40. The embodiment of figure 12 shows a further first plate 11 that provides a space within the first section 81 for receiving a head of a screw.

The connecting means for example the first, second, third or fourth plate 11, 12, 13, 14 may be mounted in the housing 1 after the production of the housing 1 or the connecting means is molded in mold material during the production of the housing 1.

In case that the connecting means is axially symmetrically to the first axis, then depending on the used embodiment the connecting means may be rotatable arranged in the housing 1.

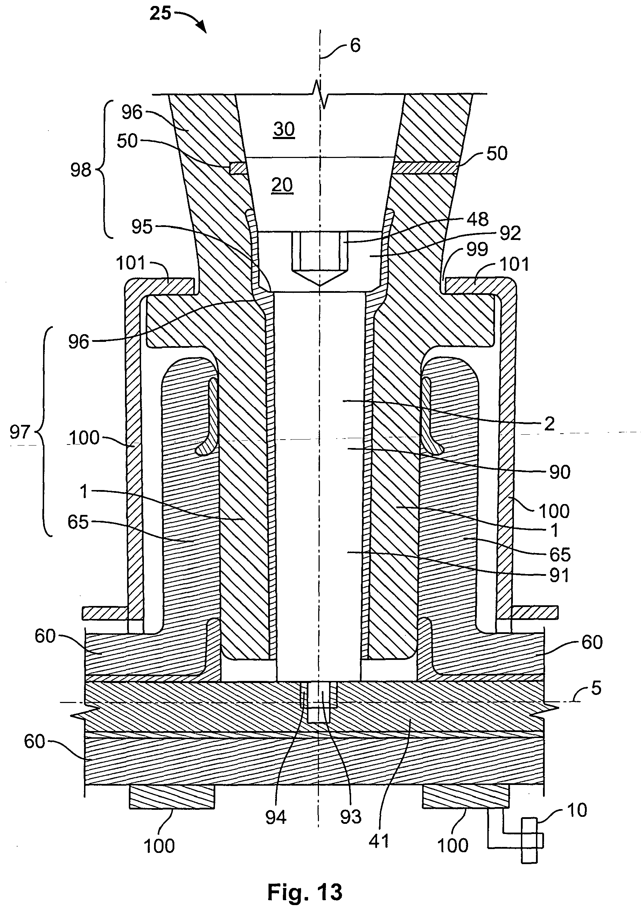

Figure 13 shows a section of a further embodiment of a connector 25 with a housing 1 and a base part 60 with a first dome 65. The first dome 65surrounds the housing 1 with a first chamber 2. In the base part 60 a terminal is arranged which is an electrical conductor and for example embodied as a busbar 41. The busbar 41 may have a rectangular cross section in a plane perpendicular to the first axis 5. The first chamber 2 is arranged along the second axis 6. The first dome 65 is arranged along the second axis 6 that is aligned in a predetermined angle to the first axis 5. In the shown embodiment, the second axis 6 of the first dome 65is perpendicular to the first axis 5. Depending on the used embodiment, several domes 65may be aligned along different axes that are not parallel. The first dome 65 encompasses an end section 97 of a housing 1. The housing 1 may basically have the shape of a sleeve. The end section 97 has the shape of a sleeve and is arranged within the first dome 65. In the end section 97, a third connecting means 90 is arranged. The third connecting means 90 comprises a pin 91 with a plate 92 at one end and a thread bolt 93 at the other end. The pin 91 is arranged along the second axis 6. The plate 92 is arranged perpendicular to the second axis 6. The thread bolt 93 is screwed in a screw thread 94 of the busbar 41. The third connecting means 90 fixes the housing 1 to the dome 65.

A lower circular side 95 of the plate 92 abuts on an upper circular ring face 96 of the housing 1. The end section 97 of the housing 1 has a smaller inner diameter than an upper section 98 of the housing 1. The end section 97 passes to the upper section 98 via the upper ring face 96. The diameter of the plate 92 is larger than the diameter of the end section 97. Therefore the lower side 95 of the plate 92 holds the housing 1 at the dome 65. On the upper side of the plate 92, the inner plug 20 abuts and connects the contact ring 51 of the second terminal 50. The inner plug 20 is pressed to the plate 92 by the outer plug 30.

In a further embodiment, there may be an additional fourth connecting means 100 at an outer face of the housing 1. The fourth connecting means 100 may be embodied as a shell that covers at least partly with the shape of a ring the base part 60 and that encompasses at least partly with the shape of a ring the housing 1. In the shown embodiment, the housing 1 comprises at least one recess 99. A rim 101 of the fourth connecting means 100 protrudes in the recess 99. Therefore, the fourth connecting means 100 additionally fixes the housing 1 to the base part 60. The recess 99 may be arranged at a level of the end section 97. Depending on the used embodiment, there may be several recesses 99 and several rims 101. Furthermore the recess 99 may have a circular shape. The rim 101 may have a circular shape that encompasses the end section 97 protruding in the circular recess 99.

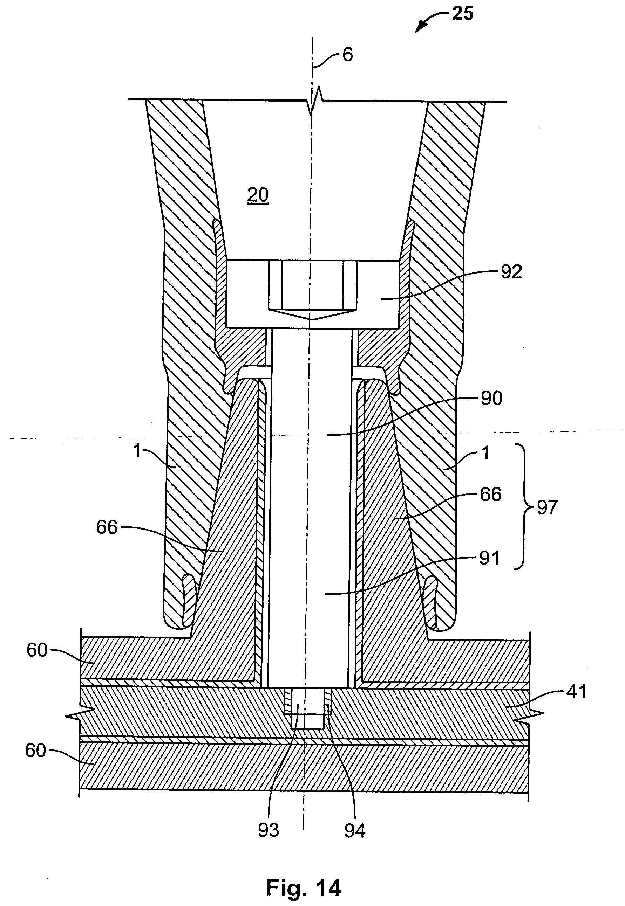

The embodiment in Figure 14 is very similar to the one in Figure 13.

The second dome 66 has a conical shape and is encircled by an end section 97 of a housing 1. The housing 1 has basically the shape of a sleeve. There is a third connecting means 90 with a plate 92 that is connected with a pin 91. The pin 91 is arranged along the second axis 6. The plate 92 is arranged perpendicular to the second axis 6. A free end of the pin 91 comprises a thread bolt 93 that is screwed in a screw thread 94 of the bus bar 41.

On the plate 92, an inner plug 20 may be arranged that electrically connects the plate 92 with a second terminal 50 as for example shown in Figure 1. Above the inner plug 20 an outer plug 30 may be arranged in the first chamber 2 within the housing 1. The outer plug 30 may close the first chamber 2. The outer plug may be in contact with the inner plug. The outer plug may be made of electrically insulating material or may be made at least partly of an electrically conducting material. An electrically conducting outer plug may be used for electrically connecting the inner plug and/or the second terminal with a further conductor.

The fourth connecting means 100 covers the outer face of the base part 60 and additionally the outer face of the first dome 65and at least partly a circular section of the housing 1.

Depending on the used embodiment, the third or the fourth connecting means 90, 100 may be omitted in the shown embodiment of Figure 13.

The described connector may be used for medium voltage application in the range of 1000 to 72 000 volt and for currents in the range of up to 250A, 630A, 1250A or more. Depending on the used embodiment, the described connectors may be used for low voltage applications in the range below 1 kV.

### Reference symbols

- 1: housing
- 2: first chamber
- 3: second chamber
- 4: first connecting means
- 5: first axis
- 6: second axis
- 7: second connecting means
- 8: first fixing means
- 9: second fixing means
- 10: further fixing means

- 11: first plate
- 12: second plate
- 13: third plate
- 14: further plate
- 15: third connecting means

- 20: inner plug
- 21: first section
- 22: second section
- 23: third section
- 25: connector
- 26: inner rim
- 27: second distance
- 28: first distance
- 29: outer face

- 30: outer plug
- 40: first terminal

- 41: further first terminal
- 42: first contact section
- 43: second contact section
- 44: first conductor
- 45: insulator
- 46: electrical equipment
- 47: screw
- 48: thread

- 50: second terminal
- 51: contact ring
- 52: conductor

- 60: base part
- 61: first recess
- 62: end face
- 63: second end face
- 65: dome
- 66: second dome

- 71: abut face
- 72: opening
- 73: wall section
- 74: end section
- 75: contraction
- 77: further recess
- 78: sleeve
- 79: ring shell

- 80: hole
- 81: first section
- 82: second section
- 83: line
- 84: circular side face
- 85: symmetry axis
- 86: first hole
- 87: second hole
- 88: third section
- 89: further pin

- 90: third connecting means
- 91: pin
- 92: plate
- 93: thread bolt
- 94: screw thread
- 95: lower side
- 96: upper ring face
- 97: end section
- 98: upper section
- 99: recess

- 100: fourth connecting means
- 101: rim

## Claims

1. A connector (25) for medium and low voltage application with a housing (1) with a first chamber (2) for receiving a first terminal (40) and at least a part of a second terminal (50), wherein the first chamber (2) is embodied to receive an inner plug (20), wherein the inner plug (20) is provided for electrically connecting the first terminal (40) with the second terminal (50), wherein the housing (1) comprises a connecting means (4) that is fixed with the housing (1), wherein the connecting means (4) is arranged at least partly within the first chamber (2), wherein the connecting means (4) is provided for connection with the first terminal (40), wherein the connecting means (4) improves the mechanical connection between the first terminal (40) and the housing (1), wherein the first chamber (2) of the housing (1) comprises an inner rim (26) that is assigned to the first connecting means (4), wherein the inner rim (26) abuts on a face of the first connecting means (4) that is assigned to the first chamber (2), wherein the inner rim (26) defines a diameter of the first chamber (2) that is smaller than the cross section of the first connecting means (4) perpendicular to the first axis (5), wherein the inner rim (26) has to be expanded over an outer face (29) of the first connecting means (4) to remove the housing (1) from the first terminal (40), **characterized in that** a further connecting means (7, 100) is arranged at an outer face of the housing (1), wherein the further connecting means has the shape of a shell (7, 100) that covers at least a part of the face of the housing (1), the shell (7, 70) is arranged at the outer face of the housing (1) in an area of the inner rim (26), the further connecting means (7, 100) comprises fixing means (8, 9, 101) for fixing the further connecting means (7, 100) to the housing, wherein the fixing means (8, 9, 101) is for example form fit means.

2. The connector of claim 1, wherein the connecting means (4) has the shape of a plate (11, 12, 13, 14).

3. The connector of one of the claims 1 or 2, wherein the further connecting means (7, 70, 100) comprises means (10) for fixing the connecting means (7, 70, 100) and the housing (1) to a wall or electrical equipment (46).

4. The connector of one of the preceding claims, wherein the connector (25) is an elbow connector and the first and second terminal (40, 41, 50) are arranged in an angle between 10° and 170°, preferably at an angle of 90° to each other.

5. The connector of any one of the preceding claims, wherein the fixing means (8, 9) is arranged at an outer face of the housing (1) in an area of the inner rim (26).

6. The connector of one of the preceding claims, wherein an outer plug (30) is provided in the first chamber (2) adjacent to the inner plug (20).

7. The connector of claim 6, wherein the outer plug (30) is made of electrically insulating material.

8. The connector of claim 6, wherein the outer plug (30) is at least partially made of electrically conducting material and is provided for connecting the inner plug (20) with a further conductor.

## Patentansprüche

1. Steckverbinder (25) für Mittel- und Niederspannungsanwendungen mit einem Gehäuse (1) mit einer ersten Kammer (2) zur Aufnahme eines ersten Anschlusses (40) und zumindest eines Teils eines zweiten Anschlusses (50), wobei die erste Kammer (2) dazu ausgelegt ist, einen inneren Stecker (20) aufzunehmen, wobei der innere Stecker (20) bereitgestellt ist, um den ersten Anschluss (40) mit dem zweiten Anschluss (50) elektrisch zu verbinden, wobei das Gehäuse (1) eine Verbindungseinrichtung (4) umfasst, die am Gehäuse (1) befestigt ist, wobei die Verbindungseinrichtung (4) zumindest teilweise in der ersten Kammer (2) angeordnet ist, wobei die Verbindungseinrichtung (4) zur Verbindung mit dem ersten Anschluss (40) bereitgestellt ist, wobei die Verbindungseinrichtung (4) die mechanische Verbindung zwischen dem ersten Anschluss (40) und dem Gehäuse (1) verbessert,
wobei die erste Kammer (2) des Gehäuses (1) einen Innenrand (26) umfasst, der der ersten Verbindungseinrichtung (4) zugeordnet ist, wobei der Innenrand (26) an einer Fläche der ersten Verbindungseinrichtung (4), die der ersten Kammer (2) zugeordnet ist, anschlägt, wobei der Innenrand (26) einen Durchmesser der ersten Kammer (2) definiert, der kleiner als der Querschnitt der ersten Verbindungseinrichtung (4) senkrecht zur ersten Achse (5) ist, wobei der Innenrand (26) über eine Außenfläche (29) der ersten Verbindungseinrichtung (4) erweitert werden muss, um das Gehäuse (1) aus dem ersten Anschluss (40) zu entfernen,
**dadurch gekennzeichnet, dass** eine weitere Verbindungseinrichtung (7, 100) an einer Außenfläche des Gehäuses (1) angeordnet ist, wobei die weitere Verbindungseinrichtung die Form einer Ummantelung (7, 100) aufweist, die zumindest einen Teil der Fläche des Gehäuses (1) bedeckt, wobei die Ummantelung (7, 70) an der Außenfläche des Gehäuses (1) in einem Bereich des Innenrands (26) angeordnet ist, wobei die weitere Verbindungseinrichtung (7, 100) eine Befestigungseinrichtung (8, 9, 101) zum Befestigen der weiteren Verbindungseinrichtung (7, 100) am Gehäuse umfasst, wobei die Befestigungseinrichtung (8, 9, 101) zum Beispiel eine Formschlusseinrichtung ist.

2. Steckverbinder nach Anspruch 1, wobei die Verbindungseinrichtung (4) die Form einer Platte (11, 12, 13, 14) aufweist.

3. Steckverbinder nach einem der Ansprüche 1 oder 2, wobei die weitere Verbindungseinrichtung (7, 70, 100) eine Einrichtung (10) zum Befestigen der Verbindungseinrichtung (7, 70, 100) und des Gehäuses (1) an einer Wand oder elektrischen Anlage (46) umfasst.

4. Steckverbinder nach einem der vorstehenden Ansprüche, wobei der Steckverbinder (25) ein Winkelstecker ist und der erste und zweite Anschluss (40, 41, 50) in einem Winkel zwischen 10° und 170°, vorzugsweise in einem Winkel von 90°, zueinander angeordnet sind.

5. Steckverbinder nach einem der vorstehenden Ansprüche, wobei die Befestigungseinrichtung (8, 9) an einer Außenfläche des Gehäuses (1) in einem Bereich des Innenrands (26) angeordnet ist.

6. Steckverbinder nach einem der vorstehenden Ansprüche, wobei ein äußerer Stecker (30) in der ersten Kammer (2) an den inneren Stecker (20) angrenzend bereitgestellt ist.

7. Steckverbinder nach Anspruch 6, wobei der äußere Stecker (30) aus einem elektrisch isolierenden Material hergestellt ist.

8. Steckverbinder nach Anspruch 6, wobei der äußere Stecker (30) zumindest teilweise aus einem elektrisch leitfähigen Material hergestellt ist und zum Verbinden des inneren Steckers (20) mit einem weiteren Leiter bereitgestellt ist.

## Revendications

1. Connecteur (25) pour des applications à moyenne et à basse tension, comprenant un boîtier (1) présentant une première chambre (2) destinée à recevoir une première borne (40) et au moins une partie d'une seconde borne (50), dans lequel la première chambre (2) est conçue de manière à recevoir une prise intérieure (20), dans lequel la prise intérieure (20) est prévue pour connecter électriquement la première borne (40) à la seconde borne (50), dans lequel le boîtier (1) comprend des moyens de connexion (4) qui sont fixés au boîtier (1), dans lequel les moyens de connexion (4) sont agencés au moins partiellement à l'intérieur de la première chambre (2), dans lequel les moyens de connexion (4) sont prévus pour établir une connexion avec la première borne (40), dans lequel les moyens de connexion (4) améliorent la connexion mécanique entre la première borne (40) et le boîtier (1), dans lequel la première chambre (2) du boîtier (1) comporte un rebord intérieur (26) qui est affecté aux premiers moyens de connexion (4), dans lequel le rebord intérieur (26) bute contre une face des premiers moyens de connexion (4) qui est affectée à la première chambre (2), dans lequel le rebord intérieur (26) définit un diamètre de la première chambre (2) qui est plus petit que la section transversale des premiers moyens de connexion (4) perpendiculaires au premier axe (5), et dans lequel le rebord intérieur (26) doit être étendu au-dessus d'une face extérieure (29) des premiers moyens de connexion (4) pour enlever le boîtier (1) de la première borne (40),
**caractérisé en ce que** des moyens de connexion supplémentaires (7, 100) sont agencés au niveau d'une face extérieure du boîtier (1), dans lequel les moyens de connexion supplémentaires ont la forme d'une enveloppe (7, 100) qui couvre au moins une partie de la face du boîtier (1), l'enveloppe (7, 100) étant agencées au niveau d'une face extérieure du boîtier (1) dans une région du rebord intérieur (26), les moyens de connexion supplémentaires (7, 100) comprenant des moyens de fixation (8, 9, 101) pour fixer les moyens de connexion supplémentaires (7, 100) au boîtier, dans lequel les moyens de fixation (8, 9, 101) sont par exemple des moyens de liaison de forme.

2. Connecteur selon la revendication 1, dans lequel les moyens de connexion (4) ont la forme d'une plaque (11, 12, 13, 14).

3. Connecteur selon l'une des revendications 1 ou 2, dans lequel les moyens de connexion supplémentaires (7, 70, 100) comprennent des moyens (10) pour fixer les moyens de connexion (7, 70, 100) et le boîtier (1) à un mur ou à un équipement électrique (46).

4. Connecteur selon l'une des revendications précédentes, dans lequel le connecteur (25) est un connecteur coudé, et les première et seconde bornes (40, 41, 50) sont agencées selon un angle compris entre 10° et 170°, de préférence selon un angle de 90° l'une par rapport à l'autre.

5. Connecteur selon l'une des revendications précédentes, dans lequel les moyens de fixation (8, 9) sont agencés au niveau d'une face extérieure du boîtier (1) dans une région du rebord intérieur (26).

6. Connecteur selon l'une des revendications précédentes, dans lequel une prise extérieure (30) est prévue dans la première chambre (2) à proximité de la prise intérieure (20).

7. Connecteur selon la revendication 6, dans lequel la prise extérieure (30) est constituée d'un matériau électriquement isolant.

8. Connecteur selon la revendication 6, dans lequel la prise extérieure (30) est au moins partiellement constituée d'un matériau électriquement conducteur et est prévue pour connecter la prise intérieure (20) à un conducteur supplémentaire.
